Europäisches Patentamt

European Patent Office

Office européen des brevets

(19)

(11) Publication number: **0 418 083 A2**

# EUROPEAN PATENT APPLICATION

(21) Application number: 90310042.8

(51) Int. Cl.⁵: **G07C 3/00**

(22) Date of filing: 13.09.90

(30) Priority: 14.09.89 US 406990

(43) Date of publication of application:
20.03.91 Bulletin 91/12

(84) Designated Contracting States:
DE FR GB IT

(71) Applicant: INTERNATIONAL CONTROL
AUTOMATION FINANCE S.A.
16 Rue des Bains
Ville de Luxembourg(LU)

(72) Inventor: Lovick, David Eugene
6322 Sunset Drive
Garfield Heights, Ohio 44125(US)

(74) Representative: Cotter, Ivan John et al
D. YOUNG & CO. 10 Staple Inn
London WC1V 7RD(GB)

(54) Control instrument condition sensing.

(57) A circuit senses the conditions of control in-
strumentation, such as a valve or valves (10), and
graphically displays the conditions on a display pan-
el or screen of a console. The circuit also incor-
porates signal checking or validation means (28, 34,
32) for monitoring the quality of the instrument con-
dition signals and displaying the quality of the mon-
itored signals on the same console screen.

FIG. I

## CONTROL INSTRUMENT CONDITION SENSING

This invention relates to circuits for sensing the conditions of control instruments, for example valves.

It has been proposed to provide circuits which monitor the conditions of instruments such as valves and provide an indication of such conditions to an operator by way of control signals to console graphics which are viewed by the operator. Thus, by viewing the console graphics, the operator would know whether the valve was fully opened, fully closed or possibly in mid-travel between these two positions. Since a mid-travel indication of the valve could also be due to a failure in the valve condition sensing, mid-travel measurement was not reliable since it could be caused by either the valve actually being in mid-travel or a failure of the instrument sensors.

Thus, there is a need for a reliable circuit that would not only provide the operator with an indication of the instrument's condition, such as a valve being opened, closed, or in a mid-travel position, but also would provide the operator with an indication that the actual sensing instrument was faulty.

According to the invention there is provided a circuit for sensing the condition of a control instrument, the circuit comprising:

means for monitoring a control instrument and establishing signals indicative thereof;

first means for receiving said signals and translating said signals into a quality signal representing a condition of the control instrument;

second means for receiving said signals and generating an operating signal indicative of a normal condition of the control instrument;

comparing means for comparing said operating signal with said quality signal to generate an output signal indicative of the condition of the control instrument; and

display means connected to the comparing means for displaying the condition of the instrument, the display means being operative to interpret the condition of the instrument from the output signal of the comparing means.

A preferred embodiment of the invention described in detail hereinbelow solves or at least alleviates the problems associated with the previously proposed circuits by providing a circuit for sensing the condition of control - instruments, such as valves, and means (e.g. console graphics) for graphically displaying the conditions on a display panel or screen along with a display of the quality of instrument sensors or monitors. To accomplish this the signals from the instrument sensors are monitored by a test quality subcircuit or unit which produces a digital output signal if any of the input signals thereto is bad and which outputs this digital signal to a transfer circuit or station for effectively preventing the passage of normal signals indicative of control instrument (e.g. valve) condition and instead passing a signal indicative of failure of the instrument sensors. Under normal conditions the transfer circuit allows the signals indicative of control instrument (e.g. valve) condition to pass to circuitry which drives the console graphics and provide the normal indications of a valve being open, closed or in mid-travel. den inhibited by a signal from the test quality subcircuit the transfer circuit or function provides an alarm signal and signals the console graphics to indicate failure of the sensors or sensing circuitry for the valve. Thus, the preferred circuit tests the signal quality or validity of normal valve condition signals. Also, the preferred circuit provides an alarm signal or alarm display to console graphics indicating failure of the instrument sensors.

The invention now will be further described, by way of illustrative and non-limiting example, with reference to the accompanying drawing, in which:

Figure 1 is a schematic circuit diagram of a circuit according to a preferred embodiment of the invention; and

Figure 2 is a graphical correlation of instrumentation signals correlated to instrument condition and console indication.

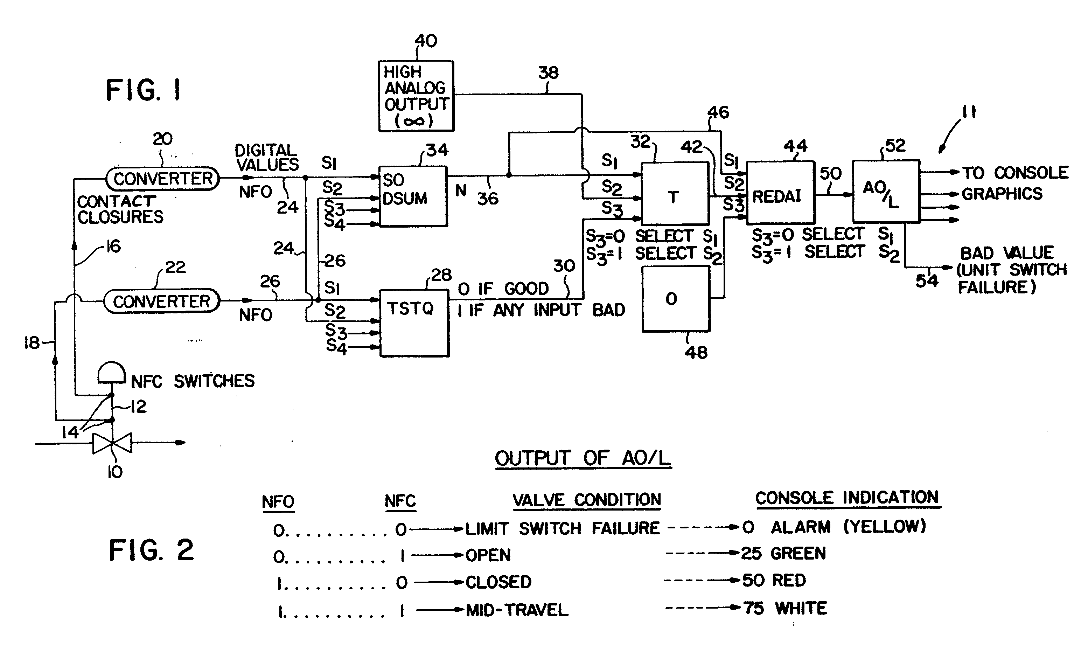

Figure 1 represents a circuit embodying the invention in function block form. The circuit shown in Figure 1 takes signals based on the condition of a valve 10 and then processes these signals to produce appropriate output control signals 11 to an operator console (not shown) which provides graphic displays to the operator indicative of the conditions of various process instruments such as the valve 10.

Each function block represents a well known microprocessor-based control module which is programmed to provide certain outputs based on the conditions of its inputs.

The valve 10 has a valve stem 12 which has normally closed switches 14 located at appropriate locations along the stem 12 to be actuated by appropriate movement of the stem 12 to the open position. This actuation could be accomplished by any number of well known means, such as placement on the stem 12 of an actuator ring or dimple which actuates the normally closed switch into an open position preventing the flow of current along lines 16 and 18 each associated with a respective one of the normally closed switches 14.

Thus, when the stem 12 is in its fully retracted position out of the valve 10 the normally closed switch 14 associated with the line 16 is opened to prevent the flow of current to a converter 20. Similarly, when the valve stem 12 is fully inserted into the valve 10 the normally closed switch 14 associated with the line 18 is opened and the flow of current is prevented to a converter 22. When the stem 12 is in mid-travel between its fully extended and fully inserted positions, both the normally closed switches 14 are closed and electric current is thereby provided to both the converters 20 and 22.

The converters 20 and 22 are signal converters which produce digital outputs along lines 24 and 26, respectively, in response to either the presence or absence of electric current in the lines 16 and 18. Thus, referring to Figure 2, it can be seen that when the valve 10 is fully open, as indicated by the stem 12 actuating the normally closed switch 14 in the line 16, no electric current flows to the converter 20. The output along the line 24 has a digital value of zero. The normally closed switch 14 associated with the line 18 has current flowing therethrough and the converter 22 thus has an output with a digital value of one along the line 26. When the valve stem 12 is fully inserted into the valve 10 the actuation of the normally closed switches 14 is reversed and the digital values along the lines 24 and 26 are reversed to a digital value of one along the line 24 and zero along the line 26. Also, when the valve stem 12 is in mid-travel between the normally closed switches 14 an electric current flows along both the lines 16 and 18 whereby the converters 20 and 22 produce digital output signals of one along both the lines 24 and 26. These above-discussed digital outputs as shown in Figure 2 correlate the digital outputs from the lines 24 and 26 and designate them NFO and NFC, respectively, i.e. not fully open and not fully closed, which represents the actual condition of the valve 10. If a failure occurs in the normally closed switch 14, or there is a break in the line 16 or 18, this causes a zero current flow to the converters 20 and 22, which produces a continuous digital value of zero along both the lines 24 and 26. This condition is indicated as a limit switch failure signal condition in Figure 2.

Additionally, the converters 20 and 22 check for signal quality (signals are good or bad) and output this indication along with the valve position logic one and zero signals to a DSUM (digital sum with gain) function block 34 and a TSTQ (test quality) function block 28 which exclusively react to only the logic and the quality outputs, respectively.

Referring again to Figure 1, it will be seen that the logic outputs of the lines 24 and 26 are inputted to the test quality function block 28 through inputs designated S1 and S2. The test quality function block 28 is a programmed microprocessor that checks the signal quality of up to four inputs designated S1 to S4. It is a four input logical or OR function block that sets an output along a line 30 to a logic zero if all the connected inputs are good and to a logic one if one or more of the connected inputs is bad. Thus, viewing the NFO and NFC logical conditions in Figure 2, there is always at least one logic one input to the test quality function block 28 for a valve 10 opened, closed or in mid-travel condition. Accordingly, for all normal conditions the output of the test quality function block 28, as applied to an input S3 of an analog transfer function block 32, is a logic zero. If a limit switch failure should occur, a logic zero results for all of the inputs of the test quality function block 28 so as to produce a logic one output signal which is sent to the input S3 of the analog transfer function block 32 along the line 30.

The logic outputs of the converters 20 and 22 are also inputted along the respective lines 24 and 26 to two of a possible four inputs S1 to S4 of the DSUM (digital sum with gain) function block 34. The DSUM function block 34 computes the weighted sum of up to four Boolean inputs using the following equation for its output N:

$$N = AS1 + BS_2 + CS3 + DS4$$

The constants A, B, C and D are programmed constants inherent in the DSUM function block 34 and are added or not depending upon whether the Boolean input has a zero or one value. In this particular case, only two inputs (S1 and S2) are used, these having weighted constants of 25 and 50, respectively. Again referring to Figure 2, the output N of the DSUM function block 34 has a numerical value of 25 for the valve in an open condition, since only the B value of 25 is factored in the N output. Similarly, an N output of 50 is provided for a closed valve 10 condition since only the 50 value for A is in effect. In a mid-travel condition the values of A and B are additive, which yields a value of 75 for the output N to indicate the mid-travel condition. In the event of a limit switch failure, both logic zero conditions prevent the addition of the A and B constants, so as thereby to give a zero value for N representing the limit switch failure condition. The aforementioned values for N are thus outputted along a line 36 from the DSUM function block 34 to an input S1 of the analog transfer function block 32. A remaining input S2 to the analog transfer function block 32 is connected by a line 38 to a high analog output function block 40. The function block 40 produces an extremely high numerical output on a constant level.

Thus, the three inputs to the analog transfer function block 32 comprise: the four possible numerical values for N from the DSUM function block 34 through the S1 input; the constant high analog value from the high analog output function block 40 by way of the S2 input; and the logic zero or one input signal supplied to the S3 input from the test quality function block 28.

The analog transfer functions block 32 functions to select either the S1 input or the S2 input as its output along a line 42. This depends on the condition of the Boolean input to S3. If the input to S3 is a logic zero, then the output along the line 42 is selected to be the S1 input. If the input to S3 is a logic one, then the analog transfer function block 32 selects the S2 input as its output along the line 42. The end result is that the analog transfer function block 32 passes a high analog output signal when the test quality function block 28 determines that there is a failure of a limit switch 14. Otherwise, the normal valve condition signals pass from the DSUM function block 34 when the test quality function block 28 does not indicate a limit switch failure.

The output of the analog transfer function block 32 also serves as an S2 input of a redundant analog input (REDAI) function block 44. The function block 44 also has an input at S1 directly from the DSUM function block 3V, along a line 46. There is a third input to the REDAI function block 44 at S3, from a zero default function block 48.

The REDAI function block 44 is used as a transfer between a pair of redundant analog signals. This transfer is controlled by an external logic select signal inputted to S3. The output value is equal to the input value selected with the input S3. This function code also checks the difference between the two inputs and the rate of change of the selected input. The output quality is considered bad if the quality of the selected input is bad. Essentially this happens if the rate of change exceeds specified rate limits, or if the difference between the two inputs is larger than a predetermined value. in operation, the REDAI function block VV passes the output of the DSUM function block 34 since the S3 input is preset to a logic zero. As a secondary function, it compares the normal signals from the DSUM function block 3V inputted to S1 with the output from the analog transfer function block 32. It should be recalled that the analog transfer function block 32 normally passes the same signal as the DSUM function block 34 output N. Thus, the REDAI function block 44 passes the signal for such a comparison. When the analog transfer function block 32 senses a limit switch failure it passes the output of the high analog output function block 40 to the S2 input of the REDAI function block 4V, which then compares it with the normal output of the DSUM function block 34. The difference causes the REDAI function block 44 to indicate an alarm condition indicative of a bad valve or a limit switch failure.

An output of the REDAI function block 44 is connected along a line 50 to an analog exception report (AO/L) function block 52. The function block 52 causes the input value on the line 50 to be sent on to the console graphics for display on a screen (not shown) in response to the normal outputs from the REDAI function block 44. Also, when a time limit or a significant change in the redundant analog inputs to the function block 44 are exceeded, it generates an alarm indicative of a dead valve 10 on an output line 54.

Referring now to both Figures 1 and 2, it will be seen that when there is a limit switch failure the output of the function block 52 is zero. The console graphics show an alarm condition indicated by the colour yellow and an audible alarm sounded by way of the line 54 to indicate either a bad valve or limit switch failure. For the normal valve open position the function block 52 outputs a numerical value of to the console graphics, which shows this value along with the colour green. For normal valve closed operation, the function block 52 outputs a numerical value of 50 which is displayed on the console graphics along with the colour red. Similarly, for a mid-travel normal valve condition the console graphics shows a value of 75 along with the colour white.

## Claims

1. A circuit for sensing the condition of a control instrument, the circuit comprising:
means (14) for monitoring a control instrument (10) and establishing signals indicative thereof;
first means (28) for receiving said signals and translating said signals into a quality signal representing a condition of the control instrument;
second means (34) for receiving said signals and generating an operating signal indicative of a normal condition of the control instrument;
comparing means (32) for comparing said operating signal with said quality signal to generate an output signal indicative of the condition of the control instrument; and
display means connected to the comparing means (32) for displaying the condition of the instrument, the display means being operative to interpret the condition of the instrument from the output signal of the comparing means (32).

2. A circuit according to claim 1, comprising a second comparing means (44) for comparing the operating and quality signals for establishing the condition of the instrument, the second comparing means being operative to transfer redundant signals with a logic selection means for checking a difference between the output signal and a predetermined input.

3. A circuit according to claim 1 or claim 2, wherein the first-mentioned comparing means (32, 40) includes means (40) for producing a high analog output signal on a constant level.

4. A circuit according to claim 1, claim 2 or claim 3, which is capable of translating control instrument signals in the form of Boolean inputs into display indications.

# FIG. 1

CONTACT CLOSURES

CONVERTER 20 → DIGITAL VALUES, $S_1$ NFO

CONVERTER 22 → NFO $S_1$

NFC SWITCHES

HIGH ANALOG OUTPUT ($\infty$) 40

SO DSUM 34

TSTQ 28 → 0 IF GOOD / 1 IF ANY INPUT BAD 30

T 32
$S_3$=0 SELECT $S_1$
$S_3$=1 SELECT $S_2$

O 48

REDAI 44
$S_3$=0 SELECT $S_1$
$S_3$=1 SELECT $S_2$

AO/L 52 → TO CONSOLE, GRAPHICS

BAD VALUE (UNIT SWITCH FAILURE) 54

# FIG. 2

## OUTPUT OF AO/L

| NFO | NFC | VALVE CONDITION | CONSOLE INDICATION |
|---|---|---|---|
| 0 | 0 | LIMIT SWITCH FAILURE | 0 ALARM (YELLOW) |
| 0 | 1 | OPEN | 25 GREEN |
| 1 | 0 | CLOSED | 50 RED |
| 1 | 1 | MID-TRAVEL | 75 WHITE |

EP 0 418 083 A2